# NEUE EUROPÄISCHE PATENTSCHRIFT

(11) **EP 0 916 486 B2**
(45) Veröffentlichungstag und Bekanntmachung des Hinweises auf die Entscheidung über den Einspruch: **17.01.2007**
(45) Hinweis auf die Patenterteilung: 19.02.2003
(21) Anmeldenummer: 99101553.8
(22) Anmeldetag: 23.07.1994
(51) Int. Cl.: B41F 13/004

(54) **Elektrisches Antriebssystem zur Verstellung von einem oder mehreren Funktionsteilen in Maschinen; Antriebsanordnung mit einem Winkellagegeber und Druckmaschine**
Electric drive for positioning one or more elements in a machine ; driving device with an angle indicator and printing machine
Système d'entrainement électrique pour le positionnemnt d'un ou plusieurs éléments dans des machines ; dispositif d'entrainement avec un indicateur d'angle et machine d'impression

(43) Veröffentlichungstag der Anmeldung: 19.05.1999
(62) Teilanmeldung aus: 94111516.4
(73) Patentinhaber: BAUMÜLLER NÜRNBERG GMBH, D-90482 Nürnberg (DE)
(72) Erfinder: Götz, Fritz Rainer, 90522 Oberasbach (DE); Marz, Heinrich- c./o.LDA Link Data Automation GmbH, 89365 Röfingen (DE); Meis, Harald, 90559 Burgthann (DE); Agne, Werner, 90552 Röthenbach (DE)
(74) Vertreter: Götz, Georg Alois

(56) Entgegenhaltungen:
- EP-A- 0 644 048
- EP-A- 0 669 208
- DE-A- 2 613 600
- DE-A- 3 228 507
- DE-A- 3 544 751
- DE-A- 4 104 209
- DE-A- 4 210 988
- DE-U- 9 306 369
- FR-A- 1 051 317
- FR-A- 2 445 651
- GB-A- 2 156 108
- US-A- 5 656 909
- Firmenschrift "Elektronische Welle mit digitalen intelligenten Antrieben für Druckmaschinen" (HMI/04.93).
- MANNESMANN-REXROTH, Indramat, "Elektronische Welle mit digitalen intelligenten Antrieben für Druckmaschinen" HMI/04 1993, Seiten 1-12

## Beschreibung

Die Erfindung betrifft eine Druckmaschine, insbesondere Offsetmaschine, die mit Direktantrieben ausgestattet ist, gemäß Oberbegriff des Patentanspruchs 1.

Antriebssysteme, Antriebsanordnungen bzw. -verfahren und Druckmaschinen etwa dieser Art sind aus DE-A-41 38 479 und DE-U-93 06 369 bekannt.

Nach dem sonstigen Stand der Technik sind die einzelnen Funktionseinheiten von Druckmaschinen, beispielsweise Abrollung/Rollenwechsler, Druckwerke, Druckzylinder, Trockner mit Kühlwalzen, Falzer, Querschneider, Ablage usw. durch mechanische Wellen und/ oder Zahnräder miteinander verkoppelt, um deren gegenseitige Winkellageorientierung herbeizuführen. Will man diese Funktionsteile bzw. -komponenten vereinzeln und auf die mechanische Verkopplung verzichten, so sind die einzelnen Funktionstelle mit eigenen Antriebssystemen auszurüsten, die nach der genannten DE-A-41 38 479 als Direktantriebe ausgeführt sind. Zur Erzielung der notwendigen Winkellageorientierung der einzelnen Druckmaschinen-Komponenten untereinander ist eine entsprechende Synchronisation der Antriebssysteme erforderlich.

Aus der mutmaßlich im April 1993 veröffentlichten Firmenschrift "Elektronische Welle mit digitalen intelligenten Antrieben" (HMI/04.93) der Firma Mannesmann Rexroth ist eine Druckmaschine mit Direktantrieben etwa der anfangs genannten Art bekannt. Beschrieben ist u. a. ein Druckzylinderantrieb mit Untersetzungsgetriebe mit direkter und indirekter Winkelerfassung, wobei ein erster Winkellagegeber beim elektrischen Antrieb an demjenigen Ende des Rotors angebracht ist, das vom anzutreibenden Druckzylinder entfernt bzw. abgewandt ist. Der zweite Winkellagegeber ist am Druckzylinder angebracht. Dadurch soll eine Lagerregelung realisiert werden, welche Fehler des Untersetzungsgetriebes erfasst und ausgleicht, um höheren Anforderungen an die Genauigkeit (unter drei Winkelminuten) gerecht werden zu können. Ferner wird in der genannten Firmenschrift noch ein Direktantrieb für den Druckzylinder ohne Getriebe zwischen dem Elektromotor und dem Zylinder vorgeschlagen. Dazu werden ein Einbaumotor und ein Elnbau-Hohlwellenwinkelgeber verwendet, wobei letzterer an der derjenigen Stirnseite des Elektromotors angebracht ist, welche dem Druckzylinder abgewandt ist. Problematisch ist dabei, dass die Direktantriebsverbindung zwischen Antriebs-Rotor und Druckzylinder sich niemals vollkommen steif realisieren lässt, so dass die Winkellageerfassung an dem genannten Ende des Antriebsrotors immer noch nicht genau der tatsächlichen Ist-Winkellage des Druckzylinders entspricht.

Zur Lösung der aufgezeigten Problematik wird erfindungsgemäß die im Patentanspruch 1 angegebene Druckmaschine vorgeschlagen. Vorteilhafte Ausgestaltungen ergeben sich aus den abhängigen Ansprüchen.

In Druck-, insbesondere Offsetmaschinen, das erfindungsgemäß läßt sich mit der Erfindung für das Antriebssystem eine hohe Qualität bzw. Genauigkeit der Winkellageorientierung, wie z. B. zwischen den Druckeinheiten, wo die Rasterpunkte verschiedener Farben in einem engen Toleranzbereich gedruckt werden müssen, erreichen.

Nach einer baulichen Konkretisierung ist der Rotor des Elektromotors mit dem Funktionsteil, z. B. Druckzylinder, baulich integriert und/oder einstückig ausgeführt. Einerseits kann dies durch Anbau des Rotors an einem Wellenstummel des drehbaren Funktionsteiles erfolgen. Zum anderen kann es vorteilhaft sein, den im erfindungsgemäßen Antriebssystem eingesetzten Elektromotor mit einem walzen- oder zylinderförmigen Außenläufer öder -rotor auszubilden. Damit ist erreicht, daß die Form des Rotors etwa der zweckmäßig rotationssymmetrischen Form des Funktionsteiles entspricht, und insbesondere darin baulich aufgenommen sein kann.

Analog dem genannten Direktantrieb des Funktionsteiles liegt im Rahmen der Erfindung eine Direktmessung von dessen Winkellage, -geschwindigkeit, -beschleunigung usw. So ist nach der Erfindung der Winkellagegeber direkt am Funktionsteil zur unmittelbaren Messung von dessen Winkel- bzw. Dreh/Schwenkbewegungen angebracht. Vor allem im Zusammenhang mit hochauflösenden, schnellen Winkellagegebern, wie an sich bekannt, kann so eine unmittelbare und mithin äußerst wirklichkeitsgetreue Beobachtung der Regelstrecke, nämlich des zu drehenden oder schwenkenden Funktionsteiles, durchgeführt werden.

Für die Zwecke der Erfindung kommen höchstauflösende, schnelle. Winkellagegeber, beispielsweise in der Ausführung als Sinua/Kosinus-Absolutgeber, als Inkrementalgeber mit Rechtecksignalen und Nullimpulssignal und als Inkrementalgeber mit Sinus/Kosinus-Signal nebst Nullimpulssignal in Frage. Um im Betrieb axiale Verstellungen des Funktionsteiles, bei Druckmaschinen beispielsweise die sogenannte Seitenregisterverstellung, zuzulassen, sind als Winkellagegeber im Sinne der Erfindung vor allem Hohlwellengeber mit eine (Zahn-) Teilung aufweisendem Geberrad und einem Geberkopf geeignet. Diese sind über einen Luftspalt voneinander radial beabstandet, und axiale Versetzungen gegeneinander innerhalb eines bestimmten Rahmens beeinträchtigen die Abtastfunktion des Geberkopfes gegenüber dem Geberrad nicht. Der mit dem Einsatz des Hohlwellengebers erzielte Vorteil besteht vor allem darin, daß das Geberrad mit dem (abzutastenden). Druckzylinder baulich integriert und/oder einstükkig ausgeführtsein kann, so daß aufgrund dieser Direktverbindung eine unmittelbare Beobachtung bzw. Erfassung von dessen Winkelbewegungen gewährleistet ist.

Aus der eingangs erläuterten Problematik wird ferner das der Erfindung zugrundeliegende Problem aufgeworfen, eine Beobachterstruktur und -methodik zu schaffen, mit der eine möglichst verlustlose und naturgetreue Messung bzw Wiedergabe des Dreh- und/oder Schwenkverhaltens von Druckzylindern möglich ist. Insbesondere soll eine maximale Kraftschlüssigkeit zwischen einem sich mitdrehenden Winkellagegeber und der davon beobachteten Drehmasse herrschen. Zur Lösung wird gemäß einer Erfindungsausbildung vorgeschlagen, daß vom Winkellagegeber dessen Fühlerrotor mit dem Druckzylinder unmittelbar steif und starr verbunden, und das Abtastorgan an der Wandung abgestützt sind, wobei eine auf das Abtastorgan einwirkende Nachführeinrichtung dergestalt ausgebildet und angeordnet ist, daß es die Verstellbewegungen des Druckzylinders mit dem Fühlerrotor entsprechend nachvollzieht. Damit können vorteilhaft Druckzylinder-Verstellbewegungen größeren Umfangs, für die sich der Luftspalt zwischen dem Abtastorgan und dem Fühlerrotor nicht ausreichend bemessen läßt, ausgeglichen werden. Nach der Erfindung wirkt nämlich die Nachführeinrichtung so auf das Abtastorgan des Winkellagegebers ein, daß das Abtastorgan die Druckzylinder (Drehmasse)/Fühlerrotor-Verstellbewegungen, jedenfalls solange diese die Abmessungen des Luftspattes zwischen Abtastorgan und Fühlerrotor überschreiten, nachvollzieht. Die Nachführeinrichtung kann mehrere Funktionskomponenten umfassen: eine in Achsrichtung des Fühlerrotors gegebenenfalls einschließlich des Motors/ Druckzylinders gerichtete Linearführung, um das Abtastorgan an Seitenregister-Verstellungen des Zylinders anzupassen; eine bezüglich der genannten Achse radial auslenkende Exzenterführung, um das Abtastorgan auf Anstellbewegungen oder Diagonalregister-Verstellungen des Druckzylinders einzustellen, die - wie an sich bekannt-mittels exzentrischer Auslenkung der Zylinder/Motor-Drehachse herbeigeführt werden. Dabei erscheint es notwendig, daß die Druchzylinder-/Fühlerrotor- und andererseits die Abtastorgan-Exzenterführungen einander entsprechend, insbesondere zueinander kongruent, ausgebildet sind, um die Nachführung vor allem in Form sich deckender, exzentrischer Umlaufbahnen von Abtastorgan und Funktionsteil/Fühlerrotor zu gewährleisten. Die Genauigkeit der Nachführung läßt sich noch dadurch fördern, daß beide Exzenterführungen durch eine gemeinsame, lösbare, vorzugsweise mechanische Verbindungseinrichtung miteinander gekoppelt und/oder synchronisiert sind.

Um eine stationäre, steife Abstützung des Abtastorgans an dem Maschinenfundament, insbesondere Wandung einer Druckmaschine, zu erreichen, ist in weiterer Ausbildung der Erfindung eine Feststelleinrichtungvorgesehen, die mit der Nachführeinrichtung derart verbunden, insbesondere synchronisiert ist, daß sie nach Beendigung der aktiven Nachführung des Abtastorgans dieses relativ zur Wandung fixiert.

Zur axialen Linearverschiebung oder exzentrischen Auslenkung des Stators entsprechend den Druckzylinder/Fühlerrotor-Verstellbewegungen ist es zweckmäßig, eine oder mehrere, gesonderte Bewegungseinrichtungen vorzusehen: zum Beispiel einen an einer Exzenterbuchse, an die das Abtastorgan fixiert ist, angreifenden Drehantrieb oder einen Linearantrieb, der am axial verschiebbar gelagerten Abtastorgan angreift, um jeweils das Abtastorgan zur Beibehaltung eines ausreichenden Luftspalts gegenüber dem Fühlerrotor nachzuführen. Diese Nachführbewegungen lassen sich in ihrer Genauigkeit noch weiter verbessern, indem die genann-, ten Dreh- oder Linearantriebe, die jeweils dem Abtastorgan einerseits und dem Drehmassen-/Fühlerrotor-Verbund andererseits zugeordnet sind, bei Registerverstellung oder Anstellbewegung (Einsatzfall: Druckmaschinen) miteinander gekoppelt und/oder synchronisiert sind.

Im Hinblick auf den eingangs erörterten Stand der Technik wird mit der im Patentanspruch 1 angegebenen Druckmaschine das der Erfindung zugrundellegende Problem gelöst, deren dreh- oder schwenkbare Funktionsteile zuverlässig beobachten und entsprechende Zustandsgrößen einem geregelten Antriebssystem zuführen zu können. Dabei sind Verfälschungen des Meßergebnisses möglichst ausgeschlossen bzw. eine möglichst verlustlose Kopplung mit maximaler Kraftschlüssigkeit in Kraft- bzw. Drehmomentübertragungsrichtung zwischen den anzutreibenden Zylindern und dem Meßwertgeber ermöglicht. Der Winkellagegeber bildet dazu einen Direkt-Beobachter für den Druckzylinder im Rahmen einer Antriebs-Steuerungskette oder eines Antriebs-Regelkreises, der die Umfangsregisterverstellung herbeiführt. Mit dieser Direktbeobachtung kann fürjedes Funktionsteil, nämlich Zylinder- bzw. Druckwerkswalze, ein spielfreier, trägheitsarmer und mechahisch-steifer Meßstrang bzw. Meßkette aufgebaut werden. Dies ergibt eine hohe Regelgenauigkeit und -dynamik, so daß sich exakte Bahnführung, konstante Bahnspannung und gleichbleibende Farbgebung über die so ermöglichte, hochpräzise Registersteuerung und Druckanstellung erreichen lassen. Die relevanten Drehmassen (beispielsweise Platten- und Gummituch-Zylinder in einem Druckwerk) werden erfindungsgemäß direkt, ohne dazwischen angeordnete Feder-, Dämpfungs-, Reibungsglieder usw., erfaßt, so daß unter Ausschluß von Elastizitäten, Nachgiebigkeiten und Spielen das Bewegungsverhalten des in der Druckmaschine zu beobachtendem Funktionsteiles originalgetreu im Regelungssystem weitergegeben werden kann. Dabei ist es. zweckmäßig, auch das Abtastorgan des Winkellagegebers an einer stationären Wandung, beispielsweise der Druckmaschinenwand, elastizitäts- und spielfrei zu fixieren.

In Weiterführung dieses Gedankens ergibt sich die Notwendigkeit, daß der an einem Druckzylinder steif und dicht angesetzte Fühlerrotor zur Realisierung von Druck-An- und Druck-Ab-Bewegungen sowie Diagonalregister-Verstellungen exzentrisch auslenkbar sind. Dem wird mit einer vorteilhaften Ausbildung der Erfindung Rechnung getragen, wonach beim Winkellagegeber Fühlerrotor und Abtastorgan zueinander mit einem solchen Abstand angeordnet und/oder derart verstellbar ausgebildet sind, daß der von diesem begrenzte Luftspalt sich ausreichend verändem und dabei entsprechende, exzentrische Auslenkungen auffangen kann.

So können Stellbewegungen des steifen Drehmasse (Druckzylinder)/Fühlrotor-Verbunds ausgeglichen werden, obgleich das Abtastorgan an der stationären Wandung ortsfest fixiert ist. Ein zwischen dem Abtastorgan und dem Fühlrotor in der Regel vorhandener Luftspalt wird hierzu ausgenutzt. Diese Erfindungsausbildung läßt sich praktisch durch einen Hohlwellengeber realisieren, bei dem der das Geberrad bildende Fühlrotor dem Abtastorgan gegenüberliegend angeordnet ist, ohne mit letzterem über Lager oder dergleichen mechanisch verbunden zu sein.

Weitere Merkmale, Einzelheiten und Vorteile auf der Basis der Erfindung ergeben sich aus den Unteransprüchen und der nachfolgenden Beschreibung bevorzugter Ausführungsbeispiele der Erfindung. Diese zeigen in:
- Fig. 1: das Schema eines Direkt-Antriebsystems der erfindungsgemäßen Druckmaschine teilweise in Längsansicht,
- Fig. 2: im teilweisen Längsschnitt einen mit einem zu drehenden Zylinder der erfindungsgemäßen Druckmaschine gekoppelten Direktantrieb,
- Fig. 3: im axialen bzw. längsschnitt die Anbringung eines Hohlwellengebers am Direktantrieb bzw. der Wandung eines Druckwerkszylinder,
- Fig. 4: eine Richtungspfeil VII in Fig. 3 entsprechende Stimansicht und
- Fig. 5: eine Richtungspfeil VIII in Figur 4 entsprechende Stimansicht.

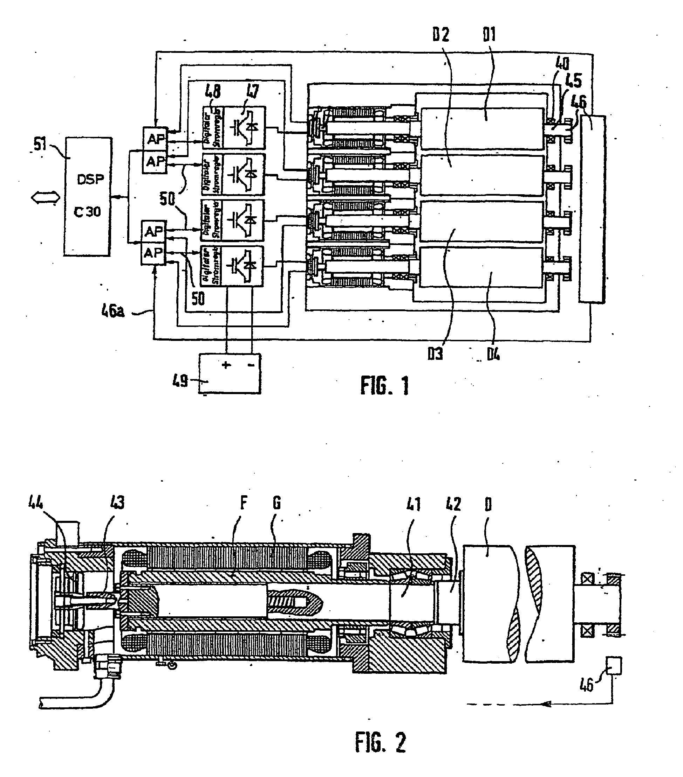

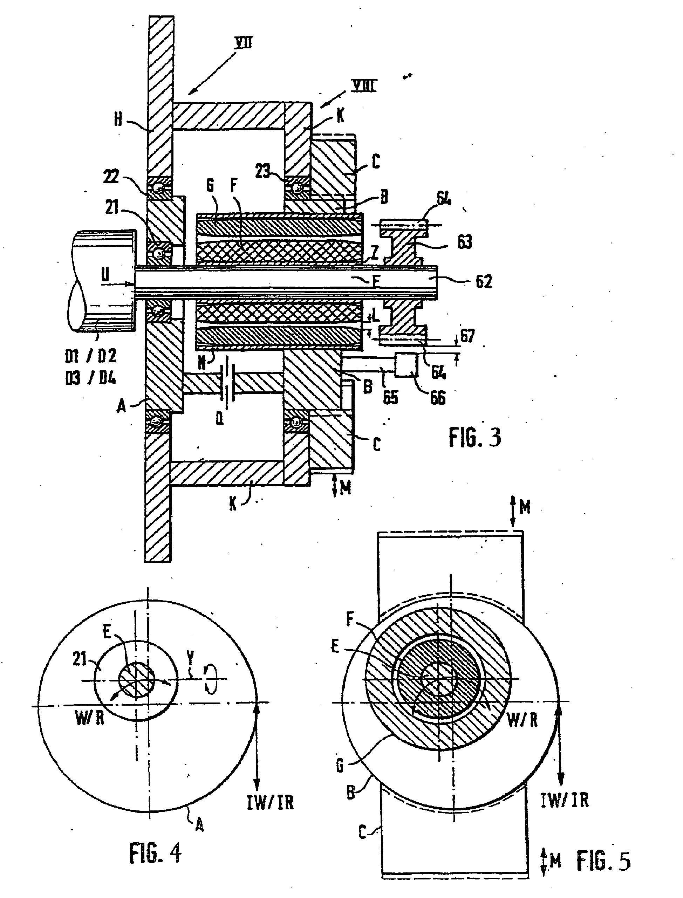

Gemäß Figur 1 besteht das Druckwerk einer Rollenoffset-Maschine aus den vier Platten-bzw. Gummituchzylindern D1, D2, D3 und D4 (schematisch dargestellt), die über Lager 40 an der ortsfesten Wandung H (vgl. Figur 5) der Maschine drehbar sind. Zu ihrer Drehung ist ihnen jeweils ein Elektromotor mit einem Rotorpaket F und einem Statorpaket G zugeordnet. Der Achsstummel 41 des Rotors F ist unmittelbar mit dem Achsstummel 42 des Zylinders D verbunden; mit anderen Worten, beidesind miteinander so baulich integriert, daß sie ineinander übergehen und dabei eine Antriebsverbindung bilden, die etwa so drehsteif wie eine einstückige Stahlwelle ist. Am den Elektromatoren F, G entgegengesetzten Ende stehen Achsstummel 45 von den Zylindern D1 - D4 vor, die ebenfalls je mit einem gleichartigen Absolut-Winkellagegeber 46 versehen sind. Die Elektromotoren F,G sind konstruktiv als Einbaumotoren ausgeführt. Sie können mit Drehstrom-Servomotoren in synchroner Bauart mit Permanentmagneten ausgeführt sein. Diese werden von einem Leistungsblock 47 jeweils mit digitalem Stromregler 48 angesteuert. Der Leistungsblock 47 wird von einer Zwischenkreis-Versorgung 49 aus mit elektrischer Energie versorgt. Die digitalen Stromregler 48 kommunizieren jeweils über störsichere Lichtwellenleiter 50 mit einem Achs-Peripheriemodul AP. Die Achs-Peripheriemodule weisen femerjeweilige Schnittstellen 46a für je einen der auf den entgegengesetzten Wellenenden bzw.

Achsstummeln 45 an den freien Stirnseiten der Zylinder D1 - D4 befindlichen Winkellagergeber 46 auf. Die Achs-Peripheriemodule AP werden von einem gemeinsamen, digitalen Signal-Prozessor 51 kontrolliert. Dieser ist als Antriebsregler für eine maximale Anzahl von Achsen mit Lageregler, Drehzahlregler, Motorführung und Geberauswertung konfigurierbar.

In den Figuren 3 - 5 ist die Nachführung des Rotors F,Z und/oder des Stators N,G des Elektromotors für die Plattenoder Gummltuchzylinder D1 - D4 dargestellt, die u.a. mittels der Exzenterbuchsen A, B realisiert ist. Damit lassen sich für die Zylinder D1 - D4 Verstellbewegungen in Längsrichtung U (Verstellung der Seitenregister), In Querrichtung R (Verstellung der Diagonalregister), Anstellbewegungen W usw. realisieren. Wegen der Einzelheiten der Zylinder-Lageeinstellung wird auf dia eingangs genannten Fundstellen DE-A-41 38 479 und DE-U-93 06 369 verwiesen. Die dort zur Beschreibung der(dortigen) Figuren 7-9 verwendeten Bezugszeichen sind in den vorliegenden Figuren 3-5 sinngemäß verwendet.

Zusätzlich ist die Zylinderwelle E mit einem sich axial erstreckenden Ansatz 62 versehen, der vom Elektromotor G,F,N,Z koaxial vorspringt und am Stirnende der Antriebswelle starr und steif fixiert und/oder damit einstückig ausgeführt ist Auf der Umfangsfläche des Ansatzes 62 ist ein Pol- oder Geberrad 63 eines Hohlwellengebers starr bzw, ortsfest fixiert. Dieses weist an seinem äußeren Rand radial vorspringende Zähne 64 auf, die In Umfangsrichtung gemäß einer bestimmten Teilung beabstandet aneinandergereiht sind. An der nach außen gewandten Stirnseite der den Stator G,N umfassenden Exzenterbuchse B ist ein parallel zur Drehachse vorspringender Befestigungsschaft 65 fixiert, der an seinem freien Ende den Geberkopf 66 des Hohlwellengebers trägt. Dieser ist mit einem bezüglich der Geberrad-Drehachse verlaufenden Abstand 67 zu den Zähnen 64 des Geberrads 63 angeordnet Der Abstand 67 ist so bemessen, daß einerseits die Wirkungsverbindung von dem Geberkopf und der Zähne 64 auf dem Geberrad 63 zustandekommen kann und andererseits in bestimmtem Umfang Axialversetzungen zwischen dem Geberkopf 66 und dem Geberrad 63 möglich sind, ohne daß die Funktionsfähigkeit dieser Wirkungsverbindung beeinträchtigt wird. Außerdem sind das Geberrad 63 und/oder dessen Zähne 64 dazu ausreichend breit ausgeführt. Auch eine mittige Anordnung des. Geberkopfs 66 gegenüber den Zähnen ist hierzu vorteilhaft.

Die Erfindung beschränkt sich gegenüber dem in Figuren 3 - 5 dargestellten, vergleichenden Ausführungsbeispiel darauf, daß der vom Geberrad 63 umgebene Ansatz direkt an der Stirnseite eines der Zylinder D1 - D4 angebracht ist und/oder der Befestigungsschaft 65 direkt an der Wandung H der Druckmaschine fixiert ist, während der Elektromotor F, G beispielsweise an der anderen Stirnseite des Zylinders D1 - D4 angreift, wie in Figur 1 angedeutet.

## Patentansprüche

1. Druckmaschine, insbesondere Offsetmaschine, mit mehreren für die Druckgebung zusammenwirkenden Zylindern (D1 - D4), die dreh- und/oder umfangsregisterversteilbar (S, T) gelagert, mit einem Antriebssystem gekoppelt und zur unmittelbaren Messung ihrer Dreh- oder Winkelstellung (Øist) mit je einem Winkellagegeber (46) direkt steif und starr verbunden sind, wobei dem Antriebssystem im Rahmen eines jeweiligen Antriebs-Regelkreises für die Dreh- und/oder Umfangsregisterverstellung des jeweiligen Zylinders (D1 - D4) Meßwerte einzig von dem Winkellagegeber (46) als Meßglied für die Dreh- oder Winkelstellung (S, T) des Zylinders (D1, D2, D3, D4) zugeführt sind,
**dadurch gekennzeichnet, dass**
der Winkellagegeber (46) am jeweiligen Zylinder (D1 - D4) auf dessen dem Antriebssystem gegenüberliegender und freier Stirnseite über einen Achsstummel (45), ein Wellenende oder einen Ansatz (62) oder ein vom Geberrad (63) eines als Hohlwellengeber ausgeführten Winkellagegebers umgebener Ansatz (62) direkt an einer Stirnseite des jeweiligen Zylinders (D1-D4) zur unmittelbaren Aufnahme von dessen Winkelbewegungen (Øistl, Øistll) angebracht ist.

2. Druckmaschine nach Anspruch 1, mit einem oder mehreren Druckwerken (3a - 3d), an deren jeweiliger Wandung (H) die Zylinder (D1 - D4) drehund/ oder umfangsregisterverstellbar (S, T,) gelagert und geführt sind, **dadurch gekennzeichnet, daß** vom Winkellagegeber (63, 66) ein Abtastorgan (66) an der Druckwerkswandung (H), und ein Fühlerrotor (63) an der Antriebswelle oder am Achsstummel (45) des Zylinders (D1, D2, D3, D4) unmittelbar und steif fixiert sind.

3. Druckmaschine nach Anspruch 1 oder 2, **gekennzeichnet durch** eine bauliche Integration des Zylinders (D1 - D4) mit dem Fühlerrotor oder Geberrad (63) eines als Hohlwellengeber (63,66) ausgebildeten Winkellagegebers, indem ein axial vorspringender Ansatz (62) des Zylinders (D1 - D4) einstückig und/oder baulich integriert mit dem Fühlerrotoroder Geberrad (63) ausgebildet ist und/oder den Fühlerrotor oder das Geberrad (63) oder einen Teil davon bildet.

4. Druckmaschine nach Anspruch 3, **dadurch gekennzeichnet, daß** auf oder über dem Außenumfang des Ansatzes (62) beziehungsweise Fühlerrotors (63) ein oder mehrere Zahnelemente (64) vorzugsweise aus magnetischem oder magnetisierbaren Werkstoff angeordnet ist.

5. Druckmaschine nach einem der Ansprüche 3 oder 4, **dadurch gekennzeichnet, daß** der Ansatz (62) von einer Teil des Fühlerrotors (63) bildenden Hülse umgeben ist, die gegebenenfalls auf ihrem Außenumfang das oder die Zahnelemente (64) und/oder den magnetischen Werkstoff trägt.

6. Druckmaschine nach einem der Ansprüche 3 bis 5, **gekennzeichnet durch** einen an Stirnseite des Zylinders (D1 - D4) angebrachten Hafterungsflansch, an dem der Ansatz beziehungsweise Fühlerrotor gegebenenfalls lösbar befestigt sind.

## Claims

1. Printing machine, in particular offset machine, with a plurality of cylinders (D1-D4) which co-operate to provide pressure, are mounted such that they can be adjusted in terms of rotational and/or circumferential register (S, T), are coupled to a drive system and, in order to measure directly their rotational or angular position (Øist), are directly connected stiffly and rigidly to a respective angular position encoder (46), wherein measured values are supplied solely by the angular position encoder (46) as measuring element for the rotational or angular position (S, T) of the cylinder (D1, D2, D3, D4) to the drive system within the framework of a respective drive control circuit for the rotational and/or circumferential register adjustment of the respective cylinder (D1-D4), **characterised in that** the angular position encoder (46) at the respective cylinder (D1-D4) is fastened directly to a front side of the respective cylinder (D1-D4) to register directly the angular movements (Øist1, Øist11) thereof at its free front side lying opposite the drive system via a shaft stub (45), a shaft end or an extension (62) surrounded by the encoder wheel (63) of an angular position encoder in the form of a hollow-shaft encoder.

2. Printing machine according to Claim 1, with one or more printing units (3a-3d), at the respective wall (H) of which the cylinders (D1-D4) are mounted and guided such that they can be adjusted in terms of rotational and/or circumferential register (S, T), **characterised in that** a sensing member (66) of the angular position encoder (63, 66) is directly and stiffly fixed to the printing unit wall (H), and a sensor rotor (63) of the angular position encoder (63, 66) is directly and stiffly fixed to the drive shaft or to the shaft stub (45) of the cylinder (D1, D2, D3, D4).

3. Printing machine according to Claim 1 or 2, **characterised by** a structural integration of the cylinder (D1-D4) with the sensor rotor or encoder wheel (63) of an angular position encoder formed as a hollow-shaft encoder (63-66), in that an axially projecting extension (62) of the cylinder (D1-D4) is formed so as to be integrally and/or structurally integrated with the sensor rotor or the encoder wheel (63) or a part thereof.

4. Printing machine according to Claim 3, **characterised in that** one or more toothed elements (64), which preferably consist(s) of a magnetic or a magnetisable material, is/are disposed at or over the outer circumference of the extension (62) or sensor rotor (63).

5. Printing machine according to either Claim 3 or 4, **characterised in that** the extension (62) is surrounded by a sleeve which forms part of the sensor rotor (63) and which optionally bears the toothed element or elements (64) and/or the magnetic material at its outer circumference.

6. Printing machine according to any one of Claims 3 to 5, **characterised by** a mounting flange which is fastened to a front side of the cylinder (D1-D4) and to which the extension and sensor rotor are secured, optionally in a detachable fashion.

## Revendications

1. Machine à imprimer, notamment machine offset, comprenant plusieurs cylindres (D1-D4) coopérant pour réaliser une impression, qui sont montés de manière réglable en rotation et/ou en repérage circonférentiel (S, T), sont couplés à un système d'entraînement, et sont reliés chacun directement et de manière fixe et rigide à un capteur de position angulaire (46) pour la mesure directe de leur position de rotation ou angulaire (Φ_{réel}), des valeurs de mesure étant fournies, uniquement par le capteur de position angulaire (46) en guise d'organe de mesure pour la position de rotation ou angulaire (S, T) du cylindre (D1, D2, D3, D4), au système d'entraînement, dans le cadre d'une boucle de régulation d'entraînement respective pour le réglage de rotation et/ou de repérage circonférentiel du cylindre considéré (D1-D4), **caractérisée en ce que** le capteur de position angulaire (46) est disposé sur le cylindre considéré (D1-D4), sur le côté frontal et libre de celui-ci, opposé à celui où se trouve le système d'entraînement, par l'intermédiaire d'un tourillon d'axe (45), d'un bout d'arbre ou d'un embout (62) ou d'un embout (62) entouré par la roue de capteur (63) d'un capteur de position angulaire réalisé en tant que capteur d'arbre creux, directement sur un côté frontal du cylindre considéré (D1-D4) pour le relevé direct de ses mouvements angulaires (Φ_{réel I,} Φ_{réel II}).

2. Machine à imprimer selon la revendication 1, comprenant un ou plusieurs groupes d'impression (3a-3d), dans les parois (H) respectives desquels les cylindres (D1-D4) sont montés et guidés de manière réglable en rotation et/ou en repérage circonférentiel (S, T), **caractérisée en ce qu'**un organe d'exploration (66) du capteur de position angulaire (63, 66) est fixé directement et de manière rigide à la paroi (II) de groupe d'impression, et un rotor de détection (63) du capteur de position angulaire (63, 66) est fixé directement et de manière rigide à l'arbre d'entraînement ou au tourillon d'axe (45) du cylindre (D1, D2, D3, D4).

3. Machine à imprimer selon la revendication 1 ou 2, **caractérisée par** une intégration de construction du cylindre (D1-D4) avec le rotor de détection ou la roue de capteur (63) d'un capteur de position angulaire réalisé en tant que capteur d'arbre creux (63, 66), par le fait qu'un embout (62) en saillie axiale, du cylindre (D1-D4) est réalisé d'un seul tenant et/ou est intégré par construction au rotor de détection ou à la roue de capteur (63) et/ou forme le rotor de détection ou la roue de capteur (63) ou une partie de ceux-ci.

4. Machine à imprimer selon la revendication 3, **caractérisée en ce que** sur ou par-dessus la périphérie extérieure de l'embout (62) ou du rotor de détection (63), sont disposés un ou plusieurs éléments de dent (64), de préférence en un matériau magnétique ou magnétisable.

5. Machine à imprimer selon l'une des revendications 3 ou 4, **caractérisée en ce que** l'embout (62) est entouré par une douille constituant une partie du rotor de détection (63), et qui le cas échéant porte sur sa périphérie extérieure, le ou les éléments de dent (64) et/ou le matériau magnétique.

6. Machine à imprimer selon l'une des revendications 3 à 5, **caractérisée par** un flasque de support rapporté sur le côté frontal du cylindre (D1-D4), et sur lequel sont fixés, le cas échéant de manière amovible, l'embout ou le rotor de détection.
